# EUROPÄISCHE PATENTANMELDUNG

(11) **EP 4 249 409 A1**
(43) Veröffentlichungstag der Anmeldung: **27.09.2023**
(21) Anmeldenummer: 22164145.9
(22) Anmeldetag: 24.03.2022
(51) Int. Cl.: B65G 43/08, B65G 47/52, B65G 47/82, B65G 65/00, B65G 1/137, B65G 47/51

(54) **VERFAHREN UND VORRICHTUNG ZUM BEWEGEN VON WAREN MIT EINEM LADUNGSTRÄGER**

(71) Anmelder: KNAPP Systemintegration GmbH, 8700 Leoben (AT)
(72) Erfinder: Kainersdorfer, Günther, 8010 Graz (AT); Maurer, Stephan, 8020 Graz (AT); Riedner, Franz-Alois, 8741 Weisskirchen (AT)
(74) Vertreter: Wirnsberger & Lerchbaum Patentanwälte OG

(57) **Zusammenfassung**

Die Erfindung betrifft ein Verfahren zum Bewegen von Waren (1), insbesondere in einem automatisierten Lager, wobei Waren (1) von einem Lager auf einen Ladungsträger, insbesondere auf ein Tray (2), bewegt werden, wonach die Waren (1) mit dem Ladungsträger über eine Förderstrecke (3) bewegt werden, wonach die Waren (1) vom Ladungsträger bewegt werden, insbesondere durch einen Abschieber (4) vom Ladungsträger abgeschoben werden. Um ein besonders effizientes Verfahren zu erreichen, ist erfindungsgemäß vorgesehen, dass der Ladungsträger bis zu einer ersten Entnahmeposition bewegt wird, an welcher eine erste Ware (1) abgeschoben wird, wonach der Ladungsträger zu einer zweiten Entnahmeposition bewegt wird, an welcher die zweite Ware (1) vom Ladungsträger bewegt wird.

Weiter betrifft die Erfindung eine Vorrichtung (19) zum gezielten Bewegen von Waren (1), insbesondere automatisiertes Lager, aufweisend eine Förderstrecke (3), auf welcher Ladungsträger mit Waren (1) bewegbar sind, wobei zumindest eine Einrichtung, insbesondere ein Abschieber (4), vorgesehen ist, mit welchem Waren (1) vom Ladungsträger bewegbar, insbesondere abschiebbar sind, insbesondere quer zur Förderrichtung (14) der Förderstrecke (3).

## Beschreibung

Die Erfindung betrifft ein Verfahren zum Bewegen von Waren, insbesondere in einem automatisierten Lager, wobei Waren von einem Lager auf einen Ladungsträger, insbesondere auf ein Tray, bewegt werden, wonach die Waren mit dem Ladungsträger über eine Förderstrecke bewegt werden, wonach die Waren vom Ladungsträger bewegt werden, insbesondere durch einen Abschieber vom Ladungsträger abgeschoben werden.

Weiter betrifft die Erfindung eine Vorrichtung zum gezielten Bewegen von Waren, insbesondere ein automatisiertes Lager, aufweisend eine Förderstrecke, auf welcher Ladungsträger mit Waren bewegbar sind, wobei zumindest eine Einrichtung, insbesondere ein Abschieber, vorgesehen ist, mit welchem Waren vom Ladungsträger bewegbar, insbesondere abschiebbar sind, insbesondere quer zur Förderrichtung der Förderstrecke.

Verfahren und Vorrichtungen in der eingangs genannten Art sind aus dem Stand der Technik bekannt, beispielsweise um Waren im Rahmen eines Kommissionierverfahrens gezielt aus einem Lager zu entnehmen, über eine Förderstrecke mit einem Ladungsträger zu einer Orientierungsstrecke zu bewegen, auf welcher Orientierungsstrecke die Waren dann einem Packbild auf einem Zielladungsträger entsprechend orientiert werden, sodass diese auf einfache Weise auf dem Zielladungsträger gemäß einem Packbild angeordnet werden können. Insbesondere sind derartige Verfahren und Vorrichtungen aus dem Dokument WO 2018/153717 A2 bekannt geworden.

Bei derartigen Verfahren steht stets eine Effizienz als zentrale Zielvorgabe fest.

Die Erfindung hat sich daher zum Ziel gesetzt, ein Verfahren der eingangs genannten Art anzugeben, welches besonders effizient ist.

Darüber hinaus soll eine Vorrichtung angegeben werden, mit welcher ein besonders effizientes Verfahren umsetzbar ist.

Die erste Aufgabe wird erfindungsgemäß durch ein Verfahren der eingangs genannten Art gelöst, bei welchem der Zielladungsträger bis zu einer ersten Ladeposition bewegt wird, an welcher eine erste Ware vom Ladungsträger bewegt, insbesondere abgeschoben, wird, wonach der Zielladungsträger zu einer zweiten Entnahmeposition bewegt wird, an welcher die zweite Ware vom Ladungsträger bewegt wird.

Im Rahmen der Erfindung wurde erkannt, dass bei Verfahren des Standes der Technik insbesondere deshalb nur eine geringe Effizienz erreicht wird, weil sämtliche auf einem Ladungsträger befindlichen Waren gleichzeitig vom Ladungsträger entnommen werden, üblicherweise mit einem Abschieber, wobei sich gemäß dem Stand der Technik in aller Regel auch nur eine einzige Ware auf einem Ladungsträger befindet. Um die einzelnen Waren gemäß einem vorberechneten Packbild auf dem Zielladungsträger anordnen zu können, ist in der Regel eine dem Packbild entsprechende Sequenz der Waren auf der Orientierungsstrecke wünschenswert. Um diese Sequenz mit Verfahren des Standes der Technik erreichen zu können, werden somit die Waren aus dem Lager entnommen und mit gesonderten Ladungsträgern bzw. Trays zur Orientierungsstrecke gemäß einer Sequenz gefördert, welche Sequenz auf der Orientierungsstrecke für das Packbild benötigt wird. Entsprechend werden sequentiell nacheinander benötigte Waren mit zumindest zwei gesonderten Trays aus dem Lager zur Orientierungsstrecke gefördert, um die Sequenz auf der Orientierungsstrecke sicherstellen zu können.

Im Rahmen der Erfindung wurde nun erkannt, dass durch ein gleichzeitiges Bewegen mehrerer Waren mit einem einzigen Ladungsträger vom Lager bis zu einer ersten Entnahmeposition eine Effizienz erhöht werden kann, insbesondere weil weniger Ladungsträger benötigt werden, wobei gleichzeitig eine gewünschte Sequenz auf der Orientierungsstrecke erreicht werden kann, indem die einzelnen Waren vom Ladungsträger nicht wie im Stand der Technik bekannt gleichzeitig, sondern sequentiell bewegt, insbesondere mit einem Abschieber abgeschoben, werden. Somit wird die auf der Orientierungsstrecke benötigte Sequenz durch die Reihenfolge des Abschiebens der Waren vom Ladungsträger erreicht. Es ist somit für die Bildung der Sequenz nicht mehr zwingend erforderlich, unterschiedliche Ladungsträger zu verwenden, die entsprechend der Sequenz auf der Förderstrecke bewegt werden.

Ein Abschieben, Bewegen bzw. Entnehmen der einzelnen Waren vom Ladungsträger kann dabei durch einen einzigen Abschieber, welcher auch als Pusher bezeichnet wird, erfolgen. Alternativ ist es natürlich auch möglich, mehrere Abschieber vorzusehen.

Alternativ zu einem oder mehreren Abschieber können auch eine oder mehrere andere Einrichtungen zum Bewegen der Ware vom Ladungsträger vorgesehen sein, beispielsweise ein oder mehrere Greifer oder dergleichen.

Die Einrichtung zum Bewegen der Waren vom Ladungsträger kann auch dazu eingerichtet sein, eine Orientierung der Waren während einer Bewegung der Waren vom Ladungsträger zu ändern. Beispielsweise kann ein translatorisch und rotatorisch ausgebildeter Greifer eine solche Einrichtung bilden, mit welchem die Waren vom Ladungsträger auf den Zielladungsträger oder eine vorgelagerte Fördereinrichtung gehoben werden können.

Der Abschieber weist üblicherweise eine Platte oder dergleichen auf, mit welcher eine Kraft auf eine Ware aufgebracht werden kann, und kann horizontal und vertikal relativ zur Förderstrecke bewegbar sein. Üblicherweise ist der Abschieber in einer Ebene normal zu einer Förderrichtung der Förderstrecke frei bewegbar. Dies kann beispielsweise durch zwei gekoppelte Linearantriebe umgesetzt sein. Der Abschieber kann auch mit unterschiedlichen Geschwindigkeiten bewegbar sein, um diesen beispielsweise sanft an eine Ware heranzuführen und die Ware anschließend mit hoher Geschwindigkeit abschieben zu können.

Der Abschieber kann auch in einer Ebene frei bewegbar sein, welche unter einem Winkel zur Förderrichtung steht, beispielsweise unter einem Winkel von 10 Grad bis 80 Grad, insbesondere 30 Grad bis 60 Grad. Dies kann insbesondere dann günstig sein, wenn Waren von bewegten Ladungsträgern abgeschoben werden sollen. Es kann auch vorgesehen sein, dass eine Lage der Ebene, in welcher der Abschieber frei bewegbar ist, relativ zur Förderrichtung geändert werden kann, um ein Abschieben von Waren und frei definierbaren Winkeln zu ermöglichen. Mit dem Abschieber kann somit auch eine Geschwindigkeit der abgeschobenen Waren parallel zur Förderrichtung beeinflusst werden.

Schließlich ist auch eine Ausbildung des Abschiebers möglich, bei welcher der Abschieber in sämtlichen Raumrichtungen frei translatorisch und gegebenenfalls auch rotatorisch bewegbar ist.

Wenn beispielsweise nur ein einziger Abschieber vorgesehen ist, kann eine erste Entnahmeposition einer Position des Ladungsträgers auf der Förderstrecke entsprechen, an welcher Position mit Abschieber nur die erste Ware abgeschoben werden kann, jedoch der Abschieber die zweite Ware noch nicht berührt, sodass ein zielgenaues, isoliertes Abschieben der ersten Ware leicht möglich ist.

Entsprechend kann es vorteilhaft sein, wenn die Waren auf dem Ladungsträger in einer Reihenfolge angeordnet werden, in welcher Reihenfolge die Waren später auf der Orientierungsstrecke benötigt werden. Früher bzw. gemäß einer Sequenz zunächst benötigte Waren werden somit üblicherweise auf dem Ladungsträger im Lager in einem vorderen Bereich und in der Sequenz später benötigte Waren weiter hinten auf dem Ladungsträger angeordnet, sodass eine Bewegungsrichtung des Ladungsträgers auf der Förderstrecke von der ersten Entnahmeposition zur zweiten Entnahmeposition nicht geändert werden muss, wenngleich dies grundsätzlich auch möglich wäre. Anders ausgedrückt kann somit eine Reihenfolge, mit welcher die Waren am Ladungsträger angeordnet sind und entsprechend welcher Reihenfolge die Waren dem Abschieber zugeführt werden, einer gewünschten Sequenz auf der Orientierungsstrecke bzw. der für das Packbild erforderlichen Sequenz entsprechen, um eine besonders effiziente Kommissionierung zu erreichen.

Üblicherweise werden im Lager nur Waren eines einzigen Typs, beispielsweise nur Getränkeflaschen eines Herstellers, auf den Ladungsträger bewegt, um ein möglichst einfach handzuhabendes Verfahren mit hoher Effizienz zu erreichen. Natürlich kann das Verfahren jedoch auch zum Handhaben unterschiedlicher Waren mit einem Ladungsträger eingesetzt werden, beispielsweise indem Getränkeflaschen und Milchpackungen gleichzeitig mit dem Ladungsträger transportiert werden. Weiter versteht es sich, dass das Verfahren nicht nur für Lebensmittel bzw. Waren für Supermärkte, sondern für jegliche Waren eingesetzt werden kann.

Das Verfahren ist natürlich auch mit mehr als zwei Entnahmepositionen möglich, welche durch eine oder mehrere Einrichtungen zur Entnahme von Waren vom Ladungsträger definiert sein können, insbesondere durch Positionen von einem oder mehreren Abschiebern.

Die Förderstrecke ist üblicherweise in einer aus dem Stand der Technik bekannten Weise zum Transport von Ladungsträgern, insbesondere von Trays, ausgebildet und kann beispielsweise einen oder mehrere Gurte, Gliederbänder und/oder angetriebene Rollen aufweisen, durch welche die Ladungsträger in gewünschte Bewegungen versetzt und abgebremst werden.

Um die einzelnen Waren punktgenau und individuell abschieben zu können, ist es vorteilhaft, wenn Positionen und Orientierungen der Waren auf dem Ladungsträger erfasst werden, insbesondere mit einem Lidar-Sensor, einer Vermessungs-Einheit oder einer Kamera, bevor der Ladungsträger die erste Entnahmeposition erreicht, wonach der Abschieber basierend auf den erfassten Positionen der Waren aktiviert wird, um die erste Ware gezielt abzuschieben.

Ergänzend zu Positionen und Orientierungen der Waren auf dem Ladungsträger selbst wird bevorzugt auch eine Position des Ladungsträgers relativ zum Abschieber kontinuierlich erfasst, beispielsweise über einen Drehgeber, welcher mit Förderrollen der Förderstrecke verbunden ist, welche Förderrollen den Ladungsträger von einem Bereich unter dem Lidar-Sensor bzw. einer Kamera zu einem Abschieber fördern. Somit ist über den Drehgeber eine Position der auf dem Ladungsträger befindlichen Waren relativ zum Abschieber exakt bekannt, sodass durch entsprechende Steuerung des Abschiebers dann punktgenau eine von mehreren Waren isoliert mittels des Abschiebers vom Ladungsträger abgeschoben werden kann, während weitere Waren am Ladungsträger verbleiben. Eine entsprechende Position, mit welcher eine erste Ware mittels des Abschiebers vom Ladungsträger bewegt werden kann, jedoch eine zweite Ware nicht von einer Bewegung des Abschiebers berührt wird, kann als erste Entnahmeposition des Ladungsträgers auf der Förderstrecke angesehen werden.

Weiter ist es günstig, wenn Abmessungen der Waren auf dem Ladungsträger erfasst werden, insbesondere mit einem Lidar-Sensor oder mit einer Kamera, bevor der Ladungsträger die erste Entnahmeposition erreicht, wonach der Abschieber basierend auf den erfassten Abmessungen der Waren aktiviert wird, um die erste Ware gezielt abzuschieben.

Abmessungen, welche die Waren aufweisen sollten, sind üblicherweise aufgrund von in einem übergeordneten Datenverarbeitungssystem gespeicherten Artikelstammdaten bekannt. Durch eine entsprechende Erfassung dieser Abmessungen unmittelbar vor der Entnahmeposition können geänderte Abmessungen zuverlässig erkannt werden, sodass Fehlerquellen minimiert werden. Dabei kann auch automatisiert erfasst werden, ob Abmessungen von Waren außerhalb von bekannten Toleranzen liegen.

Besonders günstig ist es, wenn die Positionen und/oder Abmessungen der Waren auf dem Ladungsträger erfasst werden, wenn sich der Ladungsträger nahe der ersten Entnahmeposition befindet, insbesondere wenn der Ladungsträger bis zur Entnahmeposition nur noch translatorisch bewegt wird, vorzugsweise wenn der Ladungsträger weniger als 10 m, insbesondere weniger als 3 m, entfernt von der ersten Entnahmeposition ist, besonders bevorzugt nachdem ein Boden des Ladungsträgers angehoben wurde.

Auf diese Weise wird besonders zuverlässig sichergestellt, dass die Positionen, Orientierungen und/oder Abmessungen der Waren, welche mit dem Lidar-Sensor, einer Kamera oder einer entsprechenden Einrichtung erfasst werden, den Positionen, Orientierungen und/oder Abmessungen der Waren entsprechen, wenn sich der Ladungsträger an der Entnahmeposition befindet bzw. die gewünschte Ware durch den Abschieber abgeschoben werden kann. Bewegungen der Waren relativ zum Ladungsträger zwischen dem Erfassen von Position, Orientierung und/oder Abmessungen und der Entnahmeposition sind dann nahezu ausgeschlossen.

Besonders wenn Positionen, Orientierungen und Abmessungen der Waren erst erfasst werden, nachdem ein Boden des Ladungsträgers bzw. Trays über einen Rand des Ladungsträgers angehoben wurde, sodass Waren einfach vom Boden abgeschoben werden können, ist ein Risiko äußerst gering, dass sich eine Position der Waren relativ zum Ladungsträger noch ändert. Durch entsprechende Steuerungslogik mit Servo oder Antrieben mit Frequenzumrichtern wird ein sanfter und dennoch performanter Transport ohne Positionsverschiebungen der Waren auf besonders einfache Weise gewährleistet. Dadurch kann somit ein besonders genaues Abschieben der einzelnen Waren erreicht werden, gegebenenfalls auch während einer gleichzeitigen Bewegung des Ladungsträgers.

Für einen einfachen Abgleich, ob tatsächlich die richtigen Waren aus dem Lager entnommen wurden, kann ergänzend zur Erfassung von Abmessungen der Waren auch vorgesehen sein, dass ein Barcode der Waren auf dem Ladungsträger erfasst wird, bevor die Waren die erste Entnahmeposition erreichen.

Ein besonders rasches Bewegen der Waren vom Lager zur Entnahmeposition ist bei gleichzeitig einfacher Entnahme der Waren möglich, wenn ein Ladungsträger mit einer umlaufenden Seitenwand und einem über die Seitenwand anhebbaren Boden eingesetzt wird, wobei der Boden im Bereich der Entnahmeposition angehoben wird, insbesondere mittels einer Rampe, wonach die Waren vom Ladungsträger bewegt, insbesondere abgeschoben werden. Der entsprechende Ladungsträger ist somit ähnlich einem oben offenen Behälter mit einer umlaufenden Seitenwand ausgebildet, wobei jedoch ein Boden des Behälters in vertikaler Richtung relativ zur Seitenwand angehoben werden kann. Dieses Anheben erfolgt bevorzugt mittels eines Formschlusses durch eine Rampe, sodass der Boden automatisch bei einem Bewegen, beispielsweise einem Bereich der Entnahmeposition angehoben wird, um Waren leicht abschieben zu können. Entsprechend wird der Boden üblicherweise nach einem Verlassen der Entnahmeposition wieder durch eine Rampe abgesenkt, um im Ladungsträger befindliche Waren, welche nicht entnommen wurden, sicher zu transportieren und ein unbeabsichtigtes Herausrutschen dieser Waren durch die Seitenwand verhindern zu können.

Wenn anstelle eines Abschiebers zum Entnehmen der Waren vom Ladungsträger beispielsweise ein Roboter mit einem Greifer eingesetzt wird, ist ein Anheben des Bodens nicht zwingend erforderlich, wenngleich dies auch dann erfolgen kann.

Alternativ zu einer Rampe, mit welcher der Boden während einer Bewegung entlang der Förderstrecke angehoben wird, kann natürlich auch eine Einrichtung zum Anheben des Bodens unabhängig von einer Bewegung entlang der Förderstrecke vorgesehen sein. Beispielsweise ein Linearantrieb oder ein Pneumatikzylinder, mit welchem der Boden an einer bestimmten Position angehoben werden kann, während der Tray steht. Ein solcher Linearantrieb kann unter dem Boden angeordnet sein oder beispielsweise in einem seitlich aus dem Tray ragenden Bügel eingreifen, welcher mit dem Boden verbunden ist, um den Boden anzuheben.

Um ein zuverlässiges Abschieben der Waren im Bereich der Entnahmeposition zu gewährleisten, kann vorgesehen sein, dass eine Geschwindigkeit des Ladungsträgers auf der Förderstrecke reduziert wird, bevor die erste Ware durch den Abschieber abgeschoben wird.

Es kann auch vorgesehen sein, dass der Ladungsträger auf der Förderstrecke angehalten wird, wonach die erste Ware mit dem Abschieber abgeschoben wird, wonach der Ladungsträger mit der zweiten Ware zur zweiten Entnahmeposition bewegt wird. Auch an der zweiten Entnahmeposition kann der Ladungsträger wieder angehalten werden, wonach die Ware mit dem Abschieber, mit welchem bereits die erste Ware abgeschoben wurde, abgeschoben oder mit einer anderen Einrichtung wie beispielsweise einem weiteren Abschieber entnommen wird.

Um ein besonders effizientes Verfahren zu erreichen, kann auch vorgesehen sein, dass die erste Ware vom Ladungsträger abgeschoben wird, während der Ladungsträger auf der Förderstrecke bewegt wird. Es versteht sich, dass bei einem Abschieben von Waren bei einem gleichzeitig bewegten Ladungsträger entsprechend raschere Bewegungen des Abschiebers vorteilhaft sind. Gleichzeitig ist gerade dann eine besonders genaue Positions- und Orientierungserkennung der Waren auf dem Ladungsträger günstig.

Insbesondere wenn die Waren vom Ladungsträger während einer Bewegung des Ladungsträgers abgeschoben werden, kann es günstig sein, wenn der Abschieber nicht normal zur Förderrichtung der Förderstrecke bewegt wird, sondern unter einem Winkel von 10 Grad bis 80 Grad, insbesondere 30 Grad bis 60 Grad, zur Förderrichtung. Somit kann durch eine vektorielle Addition einer Abschiebebewegung und eine Geschwindigkeit der Ware entlang der Förderrichtung ein definiertes Ziel der Ware bzw. Abschiebebewegung genau erreicht werden.

Es kann somit grundsätzlich auch vorgesehen sein, dass der Abschieber dazu ausgebildet ist, Waren unter unterschiedlichen Winkeln zur Förderstrecke abzuschieben, um durch einen Winkel einer Abschiebebewegung eine Sequenz der Waren auf einer nachgelagerten Fördereinrichtung zu erzielen.

Weiter könnte der Abschieber auch mitfahrend mit Rückhub ausgestaltet sein.

Insbesondere wenn Waren am Ladungsträger nebeneinander liegen, sodass ein Abschieben einer einzelnen Ware nicht unabhängig von einer Bewegung der weiteren Ware möglich ist, kann es vorteilhaft sein, wenn die erste Ware und die zweite Ware gemeinsam an der ersten Entnahmeposition abgeschoben werden, wonach die erste Ware von der zweiten Ware getrennt und die zweite Ware wieder auf den Ladungsträger oder einen anderen Ladungsträger bewegt wird, wonach der Ladungsträger mit der zweiten Ware zur zweiten Entnahmeposition bewegt wird. Hierzu kann beispielsweise angrenzend an die erste Entnahmeposition eine Strecke mit Einrichtungen zur Vereinzelung von Waren und Handhabung einzelner Waren vorgesehen sein, insbesondere mit einem Roboter oder einzeln ansteuerbaren Rollen. Hier können auch Einrichtungen vorgesehen sein, mit welcher Waren wieder zurück auf den Ladungsträger bewegt werden, beispielsweise ein oder mehrere zusätzliche Abschieber bzw. Pusher. Der Ladungsträger, auf welchen die Ware zurückbewegt wird, kann derselbe Ladungsträger sein, von welchem die Ware entnommen wurde, jedoch kann es sich auch um unterschiedliche Ladungsträger handeln.

Besonders günstig ist es, wenn eine oder mehrere Waren in der ersten Entnahmeposition auf einen Vereinzelungsbereich abgeschoben werden, auf welchem die Waren gezielt rotatorisch und translatorisch bewegt zumindest teilweise auf den oder einen anderen Ladungsträger zurückbewegt werden können. Dadurch können mehrere Waren auf einem Ladungsträger auch dann isoliert gehandhabt und gegebenenfalls gemäß einer vordefinierten Sequenz einer Orientierungsstrecke oder einer anderen nachgelagerten Einrichtung zugeführt werden, wenn die Waren auf dem Ladungsträger nicht hintereinander angeordnet sind. Dies kann beispielsweise der Fall sein, wenn die Waren bei einem Transport mit dem Ladungsträger vom Lager bis zur Entnahmeposition am Ladungsträger verrutschen.

Es kann auch vorgesehen sein, dass Waren, die nebeneinander auf dem Ladungsträger liegen, selektiv abgeschoben werden, indem diese Waren mit dem Abschieber langsam auf gummierte Beschleunigungsrollen geschoben werden, die auf einer Fläche neben dem Ladungsträger angeordnet sind. Diese Beschleunigungsrollen bewegen sich schneller als der Abschieber und ziehen beispielsweise die zuvorderst liegende Ware weg auf die Rollenbahn. Die hintere, dann noch halb im Ladungsträger befindlichen Ware, welche beispielsweise physisch etwa am Trayrand liegen könnte, kann mit Führungen, Geländern oder einer sonstigen Einrichtung wieder zurück in den Ladungsträger geschoben werden, sodass diese Ware im Ladungsträger verbleibt und weiter mit dem Ladungsträger bewegt werden kann. Es ist daher günstig, wenn die Vorrichtung derart ausgebildet ist, dass mit dem Abschieber Waren auf einen mit Beschleunigungsrollen ausgestatteten Bereich abgeschoben werden können, mit welchen Beschleunigungsrollen Waren bereits dann vom Ladungsträger wegbewegt werden können, wenn die Waren den Ladungsträger noch berühren, um bei einer Entladung beispielsweise einzelne, nebeneinander Waren voneinander trennen zu können.

Besonders günstig ist es, wenn ein Abschieber eingesetzt wird, welcher mit unterschiedlichen, vorzugsweise frei wählbaren, Geschwindigkeiten bewegbar ist. Der Abschieber kann dann sanft an die Waren herangeführt werden, um diese anschließend stark zu beschleunigen. Dadurch wird verhindert, dass mittels des Abschiebers bei einer raschen Bewegung ein Schlag auf die Waren ausgeübt wird, welcher zu einer unkontrollierbaren Bewegung führen könnte.

Die weitere Aufgabe wird erfindungsgemäß durch eine Vorrichtung der eingangs genannten Art gelöst, welche dazu eingerichtet ist, vom Ladungsträger an einer ersten Entnahmeposition eine erste Ware zu bewegen, insbesondere abzuschieben, den Ladungsträger anschließend zu einer zweiten Entnahmeposition zu bewegen und an der zweiten Entnahmeposition eine zweite Ware vom Ladungsträger zu bewegen, insbesondere abzuschieben, wobei die Vorrichtung insbesondere zur Durchführung eines erfindungsgemäßen Verfahrens eingerichtet ist.

Nachdem mit einer derartigen Vorrichtung auch mehrere sequentiell benötigte Waren gleichzeitig mit einem einzigen Ladungsträger aus dem Lager über die Förderstrecke gefördert werden können, wird dadurch eine erhöhte Effizienz im Verfahren erreicht.

Günstig ist es, wenn eine Einrichtung zur Erfassung einer Position und/oder Orientierung der Waren auf dem Ladungsträger im Bereich des Abschiebers vorgesehen ist, wobei die Vorrichtung zur Betätigung des Abschiebers sowie zur Bewegung des Ladungsträgers auf der Förderstrecke abhängig von der erfassten Position und/oder Orientierung der Waren auf dem Ladungsträger eingerichtet ist. Damit können die einzelnen Waren auf dem Ladungsträger sequentiell und gleichzeitig mit hoher Genauigkeit abgeschoben werden.

Die Einrichtung kann dabei stationär entlang der Förderstrecke positioniert oder relativ zur Förderstrecke bewegbar sein, um beispielsweise synchron mit einem in den Entnahmebereich einfahrenden Ladungsträger mitbewegt zu werden.

Bevorzugt ist eine Orientierungsstrecke vorgesehen, auf welche Waren vom Ladungsträger mit dem Abschieber abschiebbar sind. Mit der Orientierungsstrecke können Orientierungen der Waren geändert werden, indem die Waren gedreht, vereinzelt, gekippt, an einer bevorzugten Seite ausgerichtet und/oder gruppiert werden. Natürlich muss die Orientierungsstrecke nicht unmittelbar an einen Entnahmebereich angrenzend angeordnet sein, in welchem Entnahmebereich die Waren vom Ladungsträger mit dem Abschieber abgeschoben werden können, sondern kann zwischen dem Ladungsträger und der Orientierungsstrecke auch noch eine weitere Förderungseinrichtung vorgesehen sein wie beispielsweise ein Vereinzelungsbereich.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine Draufsicht auf eine erfindungsgemäße Vorrichtung;
Fig. 2 ein Detail einer erfindungsgemäßen Vorrichtung in 3D-Darstellung;
Fig. 3 ein weiteres Detail einer erfindungsgemäßen Vorrichtung;
Fig. 4 einen Ladungsträger mit Waren in Draufsicht;
Fig. 5a und 5b verschiedene Verfahrenszustände bei einem Abschieben einer Ware von einem Ladungsträger;
Fig. 6a bis 6d verschiedene Verfahrenszustände bei einem Zurückbewegen eines Abschiebers.

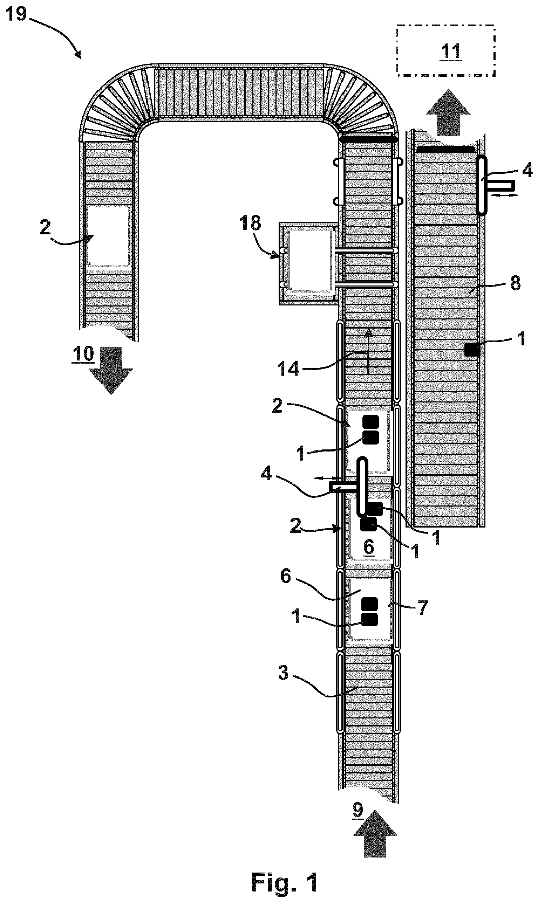

Fig. 1 zeigt eine Draufsicht auf eine erfindungsgemäße Vorrichtung 19. Ersichtlich ist eine Förderstrecke 3, auf welcher auf Ladungsträgern angeordnete Waren 1 gefördert werden, welche Waren 1 beispielsweise aus einem Lager entnommen und im Lager auf die Ladungsträger bewegt wurden. Das Lager ist hier nicht dargestellt, sondern ist eine Zuführung 9 der Ladungsträger zur Förderstrecke 3 schematisch abgebildet, über welche Zuführung 9 die Ladungsträger der Förderstrecke 3 zugeführt werden. Nach einem Verlassen des dargestellten Entnahmebereiches, in welchem die Waren 1 von den Ladungsträgern entnommen werden, werden die Ladungsträger im dargestellten Ausführungsbeispiel wieder zurück in das Lager geführt. Dies ist schematisch mit einer Rückführung 10 angedeutet.

Die als Trays 2 ausgebildeten Ladungsträger weisen einen umlaufenden Rand und einen vertikal relativ zum umlaufenden Rand bewegbaren Boden 6 auf, welcher Boden 6 mittels einer einem Entnahmebereich vorgelagerten Aushubrampe 20 angehoben wird, sodass die Waren 1 vom Boden 6 horizontal und normal oder unter einem Winkel von beispielsweise 30 Grad bis 60 Grad zu einer Förderrichtung 14 der Förderstrecke 3 abgeschoben werden können. Schematisch dargestellt ist ein normal oder unter einem entsprechenden Winkel zur Förderrichtung 14 der Förderstrecke 3 bewegbarer Abschieber 4 sowie diesem Abschieber 4 bzw. Pusher vorgelagert eine Vermessungs- und Positionserkennungseinrichtung, mit welcher Abmessungen, Positionen und Orientierungen der Waren 1 auf den Ladungsträgern erfasst werden können.

Um nun gezielt einzelne Waren 1 von einem Ladungsträger abschieben zu können, wird der Ladungsträger bis zu einer ersten Entnahmeposition bewegt, in welcher eine Bewegung des Abschiebers 4 normal oder unter einem Winkel zur Förderrichtung 14 ein Abschieben einer ersten Ware 1 vom Ladungsträger bewirkt, jedoch eine zweite Ware 1 am Ladungsträger nicht durch den Abschieber 4 berührt wird, wie dies in Fig. 1 dargestellt ist.

Wenn zwischen Waren 1 ein entsprechender Spalt und Platz ist, könnte der Abschieber 4 auch dazwischen eintauchen und die Ware 1 abschieben. Der Platz kann auch durch ein entsprechendes Hilfsmittel im Ladungsträger bzw. Tray wie einem Einsatz im Tray oder durch eine spezielle Konstruktion des Trays wie beispielsweise Noppen, spezielle Anti-Rutsch-Materialien, die das Verrutschen und Zusammenrutschen von Waren verhindern und sie in ihrer voneinander getrennten Position halten, bewerkstelligt werden.

Die Ware 1 wird durch den Abschieber 4 auf einen Vereinzelungsbereich 8 bewegt, auf welchem die Waren 1 individuell gefördert werden können, beispielsweise mit individuell antreibbaren Rollen, sodass die Waren 1 im Anschluss auf eine schematisch dargestellte Orientierungsstrecke 11 gefördert werden können.

Natürlich kann die erfindungsgemäße Vorrichtung 19 auch zum individuellen Entnehmen von einzelnen Waren 1 von einem Ladungsträger eingesetzt werden, wenn die Waren 1 anschließend nicht auf einen Vereinzelungsbereich 8 und eine Orientierungsstrecke 11 bewegt, sondern beispielsweise direkt gehandhabt bzw. kommissioniert werden.

Der Vereinzelungsbereich 8 weist auch einen Abschieber 4 bzw. Pusher auf, mit welchem die Waren 1 zurück auf die Förderstrecke 3 bzw. auf ein Tray 2 auf der Förderstrecke 3 gefördert werden können. Dies kann günstig sein, wenn zwei oder mehrere Waren 1 derart auf einem Ladungsträger positioniert sind, dass diese nur gleichzeitig mit dem Abschieber 4 abgeschoben werden können. Im Vereinzelungsbereich 8 werden die zwei Waren 1 dann getrennt, sodass eine dieser Waren 1, welche nicht benötigt wird, mit dem zweiten Abschieber 4 des Vereinzelungsbereichs 8 wieder zurück auf den Ladungsträger bewegt werden kann.

Wenngleich im Ausführungsbeispiel das Verfahren mit zwei Waren auf einem Ladungsträger dargestellt ist, versteht es sich, dass das erfindungsgemäße Verfahren natürlich mit beliebig vielen Waren auf einem Ladungsträger und beliebig vielen Entnahmepositionen umsetzbar ist. Entsprechend können natürlich auch mehr als eine Ware wieder vom Vereinzelungsbereich zurück auf einen Ladungsträger bewegt werden.

Anschließend an den Pusher ist auf der Förderstrecke 3 eine Absenkrampe 21 angeordnet, mit welcher der Boden 6 wieder relativ zum umlaufenden Rand abgesenkt wird, sodass allenfalls noch auf dem Ladungsträger befindliche Waren 1 durch die umlaufende Seitenwand 7, welche den Boden 6 dann wieder überragt, gesichert sind und nicht vom Boden 6 rutschen können.

Weiter ist nahe der Entnahmeposition bzw. nahe der Abschieber 4 ein Trayreserveplatz 18 vorgesehen, in welchem Ladungsträger in Reserve vorgehalten werden können, beispielsweise um im Falle eines Fehlers bzw. bei vorheriger Komplettentladung Waren 1 mit diesem vorgehaltenen Ladungsträger über die Rückführung 10 zurück in das Lager transportieren zu können. Auch leere Trays 2 werden über die Rückführung 10 in das Lager zurückgeführt.

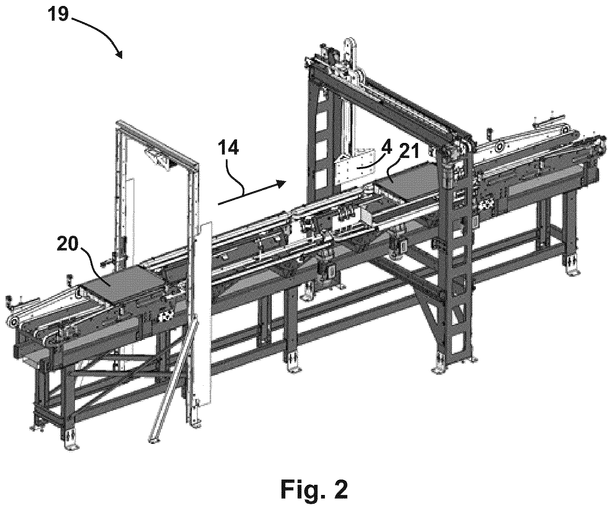

Fig. 2 zeigt eine 3D-Ansicht des Entnahmebereiches der in Fig. 1 dargestellten Vorrichtung 19. Ersichtlich ist der eine Platte aufweisende Abschieber 4 bzw. Pusher, welcher horizontal und vertikal normal oder unter einem Winkel von beispielsweise 30 Grad bis 60 Grad zu einer Förderrichtung 14 der Förderstrecke 3 bewegbar ist. Eine horizontale Bewegung ist dabei erforderlich, um Waren 1 von den Ladungsträgern horizontal abschieben zu können. Eine vertikale Bewegung des Abschiebers 4 ist günstig, um den Abschieber 4 beispielsweise bei einer Zurückbewegung über am Ladungsträger angeordnete Waren 1 hinwegbewegen zu können.

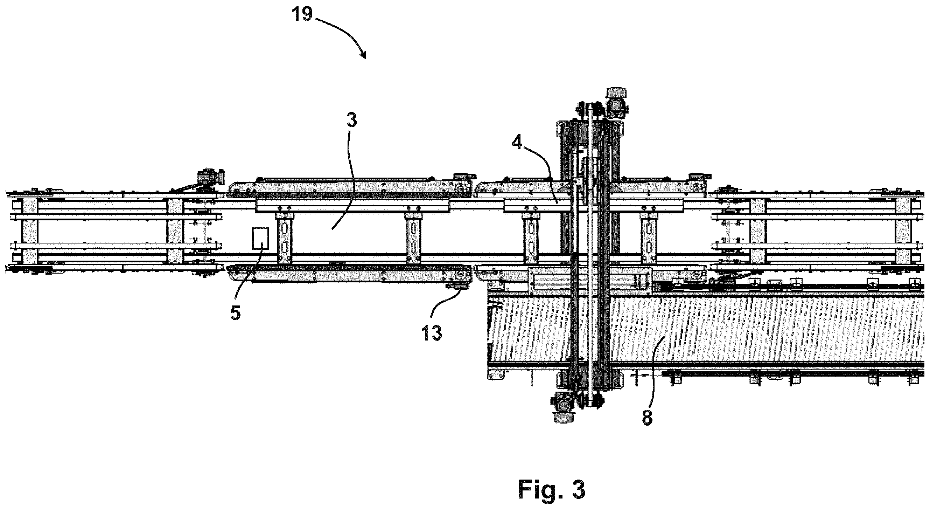

Fig. 3 zeigt in einer Draufsicht ebenfalls den Entladebereich der in Fig. 1 und 2 dargestellten Vorrichtung 19. Hier ist schematisch auch ein Lidar-Sensor 5 eingezeichnet, mit welchem Abmessungen, Orientierungen und Positionen der Waren 1 auf den auf der Förderstrecke 3 geförderten Ladungsträgern erfasst werden können. Weiter ist ein Drehgeber 13 schematisch dargestellt, mit welchem eine eindeutige Zuordnung zwischen einer Position des Ladungsträgers, und somit einer Position der auf dem Ladungsträger angeordneten Waren 1, und einer Position des Abschiebers 4 gewährleistet ist, welche Relativposition für ein besonders genaues Abschieben der einzelnen Waren 1 genutzt werden kann.

Weiter ist ersichtlich, dass mit dem Abschieber 4 ein Abschieben der Waren 1 nicht nur vom Ladungsträger selbst auf den angrenzenden Vereinzelungsbereich 8, sondern auch ein Schieben im Vereinzelungsbereich 8 selbst noch möglich ist. So kann der Abschieber 4 über eine gesamte Breite des Vereinzelungsbereich 8 bewegt werden. Somit können die abgeschobenen Waren 1 horizontal auch auf dem Vereinzelungsbereich 8 mit dem Abschieber 4 positioniert werden.

Um Positionen des Ladungsträgers relativ zur Förderstrecke 3 punktgenau bestimmen zu können, können ergänzend auch nicht dargestellte Lichtschranken und gegebenenfalls weitere Sensoren vorgesehen sein. Lichtschranken können auch beispielsweise für eine Höhenkontrolle eingesetzt werden, um Höhen der Waren am Ladungsträger zu bestimmen.

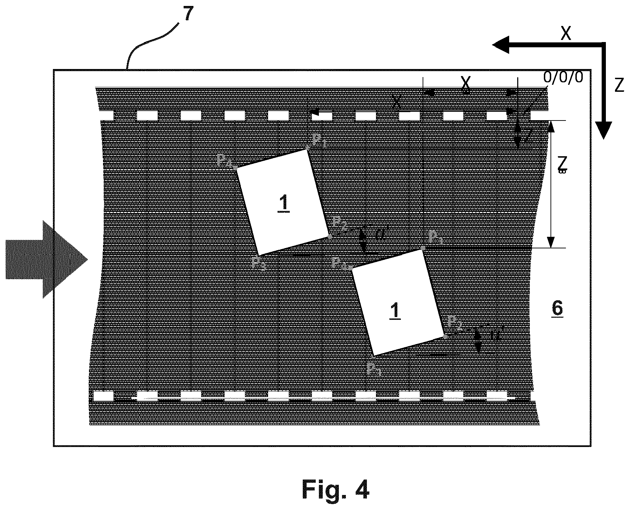

Fig. 4 zeigt eine Draufsicht auf einen Ladungsträger mit Waren 1, welche beispielsweise mit einem Lidar-Sensor 5 oder einer Kamera erfasst werden können. Ersichtlich ist, dass Abmessungen, Orientierungen und Positionen der Waren 1 erfasst werden. Üblicherweise werden Eckpunkte der Waren 1 bestimmt, anhand welcher Eckpunkte eine Position der Waren 1 relativ zum Ladungsträger präzise ermittelt werden kann. Durch die entsprechend ermittelten Abmessungen, Orientierungen und Positionen ergibt sich eine Entnahmeposition für den Ladungsträger, welche Entnahmeposition des Ladungsträgers gewährleistet, dass mit dem Abschieber 4 nur eine oder mehrere definierte Waren 1, jedoch nicht alle am Ladungsträger befindlichen Waren 1 gleichzeitig abgeschoben werden, sofern nur einzelne Waren 1 entnommen werden sollen.

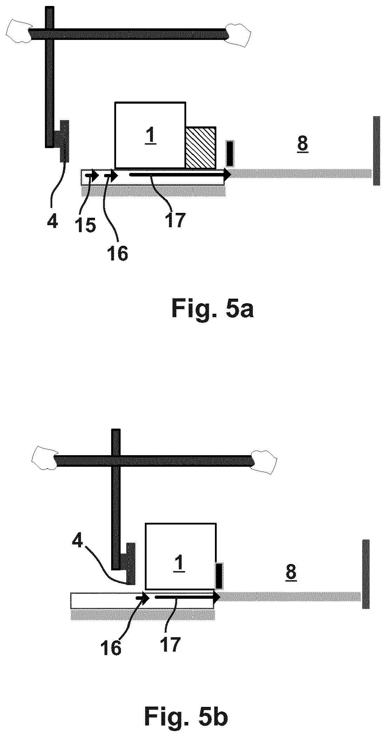

Fig. 5a und 5b zeigen unterschiedliche Arbeitszustände bei einem Abschieben einer Ware 1 vom Ladungsträger. Wie in Fig. 5a ersichtlich, ist der Abschieber 4 zunächst von der Ware 1 beabstandet. Der Abschieber 4 ist üblicherweise mit unterschiedlichen Geschwindigkeiten bewegbar, beispielsweise mit drei unterschiedlichen Geschwindigkeiten. Für eine Abschiebebewegung wird der Abschieber 4 bevorzugt zunächst schnell über einen ersten Verfahrweg 15 an die Ware 1 herangeführt, wonach der Abschieber 4 abgebremst und langsam entlang eines zweiten Verfahrweges 16 an die Ware 1 angelegt wird, wonach die Ware 1 mit einer Abschiebegeschwindigkeit entlang eines dritten Verfahrweges 17 abgeschoben wird.

In Fig. 5b ist eine Situation ersichtlich, in welcher der Abschieber 4 bereits nahe an der Ware 1 positioniert ist. Es kann dann sofort mit einer langsamen Annäherung des Abschiebers 4 an die Ware 1 entlang eines zweiten Verfahrweges 16 begonnen werden, wonach die Ware 1 mit einer gewünschten Abschiebegeschwindigkeit entlang eines dritten Verfahrweges 17 abgeschoben wird. Auf diese Weise wird ein kontrolliertes und gleichzeitig effizientes sowie punktgenaues Abschieben der Waren 1 gewährleistet, ohne dass auf die Waren 1 ein Schlag ausgeübt wird.

Die Waren 1 können dabei sowohl von einem in der Entnahmeposition stehenden Ladungsträger als auch während einer Bewegung des Ladungsträgers abgeschoben werden.

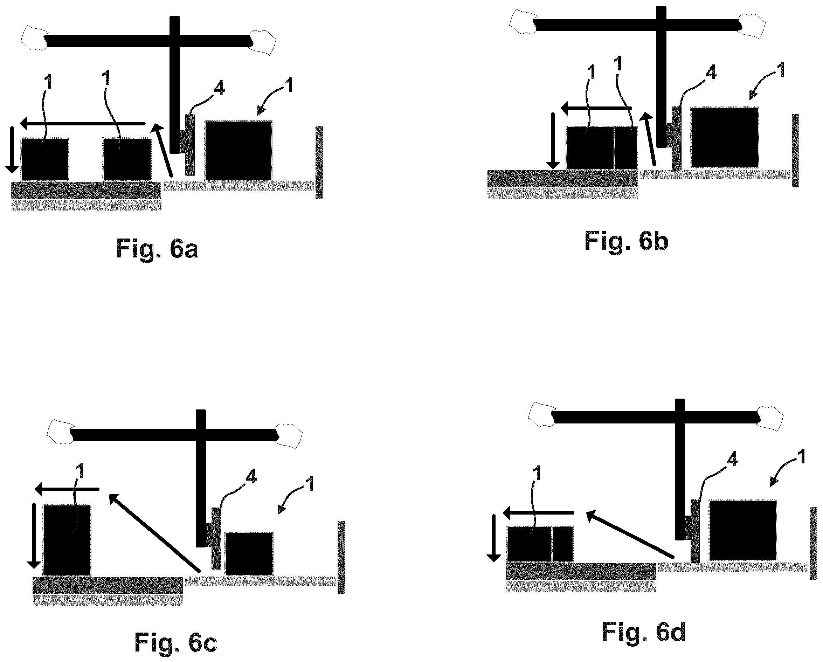

Fig. 6a bis 6d zeigen unterschiedliche Möglichkeiten, den Abschieber 4, mit welchem eine Ware 1 abgeschoben wurde und welcher sich auf der im Bereich der Orientierungsstrecke 11 befindet, zurückzubewegen, sodass mit dem Abschieber 4 eine oder mehrere Waren 1 abgeschoben werden können. Wie ersichtlich wird der Abschieber 4 hierzu zunächst angehoben und anschließend entgegen einer Abschieberichtung über die Waren 1 bewegt, wonach der Abschieber 4 abgesenkt wird.

Mit einem erfindungsgemäßen Verfahren ist somit ein besonders effizientes Bewegen von Waren 1 insbesondere in einem automatisierten Lager möglich. Aufgrund einer genauen Positionsbestimmung der einzelnen Waren 1 ist dabei ein Abschieben einzelner Waren 1 von einem Ladungsträger mit mehreren Waren 1 auch während einer Bewegung des Ladungsträgers möglich, um eine gewünschte Sequenz an einer Orientierungsstrecke 11 zu bilden.

## Patentansprüche

1. Verfahren zum Bewegen von Waren (1), insbesondere in einem automatisierten Lager, wobei Waren (1) von einem Lager auf einen Ladungsträger, insbesondere auf ein Tray (2), bewegt werden, wonach die Waren (1) mit dem Ladungsträger über eine Förderstrecke (3) bewegt werden, wonach die Waren (1) vom Ladungsträger bewegt werden, insbesondere durch einen Abschieber (4) vom Ladungsträger abgeschoben werden, **dadurch gekennzeichnet, dass** der Ladungsträger bis zu einer ersten Entnahmeposition bewegt wird, an welcher eine erste Ware (1) vom Ladungsträger bewegt, insbesondere abgeschoben, wird, wonach der Ladungsträger zu einer zweiten Entnahmeposition bewegt wird, an welcher die zweite Ware (1) vom Ladungsträger bewegt wird.

2. Verfahren nach Anspruch 1, **dadurch gekennzeichnet, dass** Positionen und Orientierungen der Waren (1) auf dem Ladungsträger erfasst werden, insbesondere mit einem Lidar-Sensor (5) oder einer Kamera, bevor der Ladungsträger die erste Entnahmeposition erreicht, wonach der Abschieber (4) basierend auf den erfassten Positionen der Waren (1) aktiviert wird, um die erste Ware (1) gezielt abzuschieben.

3. Verfahren nach Anspruch 1 oder 2, **dadurch gekennzeichnet, dass** Abmessungen der Waren (1) auf dem Ladungsträger erfasst werden, insbesondere mit einem Lidar-Sensor (5) oder mit einer Kamera, bevor der Ladungsträger die erste Entnahmeposition erreicht, wonach der Abschieber (4) basierend auf den erfassten Abmessungen der Waren (1) aktiviert wird, um die erste Ware (1) gezielt abzuschieben.

4. Verfahren nach Anspruch 2 oder 3, **dadurch gekennzeichnet, dass** die Positionen und/oder Abmessungen der Waren (1) auf dem Ladungsträger erfasst werden, wenn sich der Ladungsträger nahe der ersten Entnahmeposition befindet, insbesondere wenn der Ladungsträger bis zur Entnahmeposition nur noch translatorisch bewegt wird, vorzugweise wenn der Ladungsträger weniger als 10 m entfernt von der ersten Entnahmeposition ist, besonders bevorzugt nachdem ein Boden (6) des Ladungsträgers angehoben wurde.

5. Verfahren nach einem der Ansprüche 1 bis 4, **dadurch gekennzeichnet, dass** ein Ladungsträger mit einer umlaufenden Seitenwand (7) und einem über die Seitenwand (7) anhebbaren Boden (6) eingesetzt wird, wobei der Boden (6) im Bereich der Entnahmepositionen angehoben wird, insbesondere mittels einer Rampe, wonach die Waren (1) vom Ladungsträger bewegt, insbesondere abgeschoben, werden.

6. Verfahren nach einem der Ansprüche 1 bis 5, **dadurch gekennzeichnet, dass** eine Geschwindigkeit des Ladungsträgers auf der Förderstrecke (3) reduziert wird, bevor die erste Ware (1) durch den Abschieber (4) abgeschoben wird.

7. Verfahren nach einem der Ansprüche 1 bis 6, **dadurch gekennzeichnet, dass** der Ladungsträger auf der Förderstrecke (3) angehalten wird, wonach die erste Ware (1) mit dem Abschieber (4) abgeschoben wird, wonach der Ladungsträger mit der zweiten Ware (1) zur zweiten Entnahmeposition bewegt wird.

8. Verfahren nach einem der Ansprüche 1 bis 6, **dadurch gekennzeichnet, dass** die erste Ware (1) vom Ladungsträger abgeschoben wird, während der Ladungsträger auf der Förderstrecke (3) bewegt wird.

9. Verfahren nach einem der Ansprüche 1 bis 8, **dadurch gekennzeichnet, dass** die erste Ware (1) und die zweite Ware (1) gemeinsam an der ersten Entnahmeposition abgeschoben werden, wonach die erste Ware (1) von der zweiten Ware (1) getrennt und die zweite Ware (1) wieder auf den oder einen anderen Ladungsträger bewegt wird, wonach der Ladungsträger mit der zweiten Ware (1) zur zweiten Entnahmeposition bewegt wird.

10. Verfahren nach einem der Ansprüche 1 bis 9, **dadurch gekennzeichnet, dass** eine oder mehrere Waren (1) in der ersten Entnahmeposition auf einen Vereinzelungsbereich (8) abgeschoben werden, auf welchem die Waren (1) gezielt rotatorisch und translatorisch bewegt und von welchem aus die Waren (1) zumindest teilweise auf den Ladungsträger zurückbewegt werden können.

11. Verfahren nach Anspruch 10, **dadurch gekennzeichnet, dass** eine Einrichtung, insbesondere ein Abschieber (4) oder ein Pusher, im Vereinzelungsbereich (8) vorgesehen ist, mit welcher Einrichtung einzelne Waren (1) wieder zurück auf die Förderstrecke (3) bzw. einen auf der Förderstrecke (3) angeordneten Ladungsträger bewegt werden können.

12. Verfahren nach einem der Ansprüche 1 bis 11, **dadurch gekennzeichnet, dass** der Abschieber (4) während des Abschiebens der Waren (1) mit unterschiedlichen Geschwindigkeiten bewegt wird, wobei der Abschieber (4) insbesondere langsam an die Waren (1) herangeführt und anschließend beschleunigt wird.

13. Vorrichtung (19) zum gezielten Bewegen von Waren (1), insbesondere automatisiertes Lager, aufweisend eine Förderstrecke (3), auf welcher Ladungsträger mit Waren (1) bewegbar sind, wobei zumindest eine Einrichtung, insbesondere ein Abschieber (4), vorgesehen ist, mit welchem Waren (1) vom Ladungsträger bewegbar, insbesondere abschiebbar, sind, insbesondere quer zur Förderrichtung (14) der Förderstrecke (3), **dadurch gekennzeichnet, dass** die Vorrichtung (19) dazu eingerichtet ist, vom Ladungsträger an einer ersten Entnahmeposition eine erste Ware (1) zu bewegen, insbesondere abzuschieben, den Ladungsträger anschließend zu einer zweiten Entnahmeposition zu bewegen und an der zweiten Entnahmeposition eine zweite Ware (1) vom Ladungsträger zu bewegen, insbesondere abzuschieben, insbesondere zur Durchführung eines Verfahrens nach einem der Ansprüche 1 bis 12.

14. Vorrichtung (19) nach Anspruch 13, **dadurch gekennzeichnet, dass** eine Einrichtung zur Erfassung einer Position und/oder Orientierung der Waren (1) auf dem Ladungsträger im Bereich des Abschiebers (4) vorgesehen ist, wobei die Vorrichtung (19) zur Betätigung des Abschiebers (4) sowie zur Bewegung des Ladungsträgers auf der Förderstrecke (3) abhängig von der erfassten Position und/oder Orientierung der Waren (1) auf dem Ladungsträger eingerichtet ist.

15. Vorrichtung (19) nach Anspruch 13 oder 14, **dadurch gekennzeichnet, dass** eine Orientierungsstrecke (11) vorgesehen ist, auf welche Waren (1) vom Ladungsträger mit dem Abschieber (4) abschiebbar sind.
